(19) Europäisches Patentamt / European Patent Office / Office européen des brevets

(11) **EP 4 425 185 A1**

(12) # EUROPEAN PATENT APPLICATION
published in accordance with Art. 153(4) EPC

(43) Date of publication:
**04.09.2024 Bulletin 2024/36**

(21) Application number: **22886687.7**

(22) Date of filing: **11.10.2022**

(51) International Patent Classification (IPC):
**G01N 35/00** (2006.01)    **B06B 1/06** (2006.01)
**G01N 35/02** (2006.01)

(52) Cooperative Patent Classification (CPC):
**B06B 1/06; G01N 35/00; G01N 35/02**

(86) International application number:
**PCT/JP2022/037922**

(87) International publication number:
**WO 2023/074358 (04.05.2023 Gazette 2023/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **27.10.2021   JP 2021175576**

(71) Applicant: **HITACHI HIGH-TECH CORPORATION
Tokyo 105-6409 (JP)**

(72) Inventors:
• **HAMADA Hiroki
  Tokyo 105-6409 (JP)**
• **KATO Hajime
  Tokyo 100-8280 (JP)**
• **YABUTANI Hisashi
  Tokyo 105-6409 (JP)**

(74) Representative: **MERH-IP Matias Erny Reichl
Hoffmann
Patentanwälte PartG mbB
Paul-Heyse-Strasse 29
80336 München (DE)**

(54) ## AUTOMATED ANALYZING DEVICE, AND ABNORMALITY DETERMINING METHOD FOR SAME

(57)    [Problem]
Provided are a highly reliable automatic analyzer and an abnormality determination method for the same.
[Solution]
The automatic analyzer comprises: a stirring unit that stirs a sample and a reagent by irradiating a reaction container with ultrasonic waves; a power amplifier that applies a voltage to a piezoelectric element of the stirring unit; an impedance measuring unit that measures an electric impedance of the piezoelectric element of the stirring unit; an analyzing unit that makes component analysis of a reaction liquid of the sample and the reagent; and a control unit that controls the stirring unit, the power amplifier, the impedance measuring unit, and the analyzing unit. The automatic analyzer has a plurality of stirring units as mentioned above. The control unit determines a connection condition between the stirring unit and the power amplifier or the impedance measuring unit, or an inclination condition of the automatic analyzer according to the electric impedance measured by the impedance measuring unit for the stirring units.

FIG. 8

EP 4 425 185 A1

**Description**

Technical Field

The present invention relates to an automatic analyzer and an abnormality determination method for the same.

Background Art

A technique of stirring a sample and a reagent in a reaction container by irradiating the reaction liquid with ultrasonic waves to cause the sample and the reagent to flow has been developed and already mounted on an automatic analyzer. In the stirring method using ultrasonic waves, a reaction liquid can be stirred in a non-contact manner. Therefore, carry-over of a sample and a reagent or introduction of cleaning water caused by use of a stirring rod or the like can be avoided. For example, PTL 1 discloses an automatic analyzer where a plurality of electrodes that generate ultrasonic waves are disposed to detect a position of a liquid level using a difference between impedances measured by the electrodes. In addition, PTL 2 discloses an automatic analyzer that detects whether or not a reaction liquid is present by measuring an impedance of a piezoelectric element of a stirring unit.

Citation List

Patent Literature

PTL 1: JP2007-40843A
PTL 2: JP2010-96638A

Summary of Invention

Technical Problem

In order to improve the processing capacity of an automatic analyzer, when a plurality of stirring units are provided and are connected to a host computer side through connectors having the same shape, there is a possibility that an abnormality may occur in a wiring of each of the stirring units due to erroneous insertion of the connector. When each of the stirring units and the host computer side are connected by an unintended combination, a discrepancy occurs in a relationship between preset stirring parameters and a reaction liquid to be stirred, the reaction liquid cannot be sufficiently stirred, and an appropriate analysis result cannot be output. In addition, when an automatic analyzer is inclined due to a dent of a placement surface, an appropriate analysis result cannot also be output.
An object of the present invention is to provide a highly reliable automatic analyzer and an abnormality determination method for the same.

Solution to Problem

In order to achieve the object, according to the present invention, there is provided an automatic analyzer including: a stirring unit that stirs a sample and a reagent by irradiating a reaction container with ultrasonic waves; a power amplifier that applies a voltage to a piezoelectric element of the stirring unit; an impedance measuring unit that measures an electric impedance of the piezoelectric element of the stirring unit; and an analyzing unit that makes component analysis of a reaction liquid of the sample and the reagent; and a control unit that controls the stirring unit, the power amplifier, the impedance measuring unit, and the analyzing unit, in which a plurality of the stirring units are provided, and the control unit determines a connection condition between the stirring unit and the power amplifier or the impedance measuring unit, or an inclination condition of the automatic analyzer according to the electric impedance measured by the impedance measuring unit for the plurality of stirring units.
In addition, according to the present invention, there is provided an abnormality determination method for an automatic analyzer, the automatic analyzer including a stirring unit that stirs a sample and a reagent by irradiating a reaction container with ultrasonic waves, a power amplifier that applies a voltage to a piezoelectric element of the stirring unit, an impedance measuring unit that measures an electric impedance of the piezoelectric element of the stirring unit, and an analyzing unit that makes component analysis of a reaction liquid of the sample and the reagent, the abnormality determination method including: determining a connection condition between the stirring unit and the power amplifier or the impedance measuring unit, or an inclination condition of the automatic analyzer according to the electric impedance measured by the impedance measuring unit for at least two of the stirring units.

Advantageous Effects of Invention

According to the present invention, it is possible to provide a highly reliable automatic analyzer and an abnormality determination method for the same.

Brief Description of Drawings

Fig. 1 is a schematic configuration diagram of the automatic analyzer according to a present embodiment.
Fig. 2 is a diagram that shows configurations of a stirring unit, and a power amplifier and an impedance measuring unit which are connected to the stirring unit.
Fig. 3 is a diagram that shows details of a configuration of an impedance measuring circuit.
Fig. 4A is an example of the result of ImpS measurement of the piezoelectric element in the air.
Fig. 4B is an example of the result of ImpS measurement with one side of the piezoelectric element in contact with constant-temperature water.
Fig. 5 is a view that shows the influence of standing wave between a reaction container and a piezoelectric element.
Fig. 6 is a graph that shows the frequency characteristics of electric impedance when a liquid is present at a position of a segmented electrode and when a liquid is not present at the position.
Fig. 7 is a graph that shows the relation between Esw and the ID number of each segmented electrode when the amount of water in the reaction container changes.
Fig. 8 is a schematic view that shows a case where the stirring unit is normally connected to the relay board.
Fig. 9 is a schematic view that shows a case where the stirring unit is not normally connected to the relay board.
Fig. 10 is a part (first half) of a flowchart that shows a method for determining whether a connector is correctly inserted into the stirring unit.
Fig. 11 is the remaining part (latter half) of the flowchart that shows the method for determining whether the connector is correctly inserted into the stirring unit.
Fig. 12 is a view that shows the water level of constant-temperature water at the time of determining the inclination of the constant temperature bath.
Fig. 13 is a graph that shows the liquid level of constant-temperature water in each stirring unit.

Description of Embodiments

Hereinafter, an embodiment of the present invention will be described using the drawings.

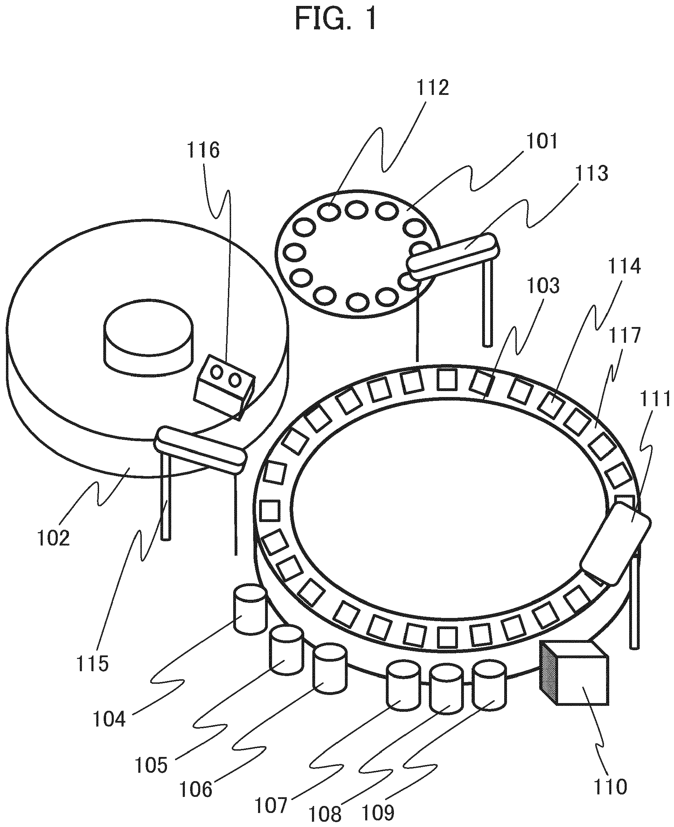

Fig. 1 is a schematic configuration diagram showing an automatic analyzer according to a present embodiment. As shown in Fig. 1, the automatic analyzer includes a sample storing unit 101, a reagent storing unit 102, a reaction unit 103, stirring units 104 to 109, an analyzing unit 110, a cleaning unit 111, a sample dispensing mechanism 113, and a reagent dispensing mechanism 115. In addition, although not shown in Fig. 1, the automatic analyzer further includes a control unit (host computer) that is configured by an electronic circuit or a storage device, and the operation of each of the units and each of the mechanisms is controlled by the control unit.
In the sample storing unit 101, a sample container such as a test tube is stored, and the sample container contains a sample 112. The reaction unit 103 is configured by a rotatable reaction disk, and reaction containers 114 (reaction cells) are arranged on the reaction disk in a circumferential pattern. In addition, the reaction disk includes a constant temperature bath that holds constant-temperature water at a designated temperature, and by bringing the constant-temperature water circulating in the constant temperature bath into contact with the reaction containers 114, the reaction containers 114 are kept at the prescribed temperature. The sample dispensing mechanism 113 aspirates a necessary amount of the sample 112 for analysis from the inside of the sample container, and discharges the aspirated sample 112 into the reaction container 114 on the reaction unit 103. The reagent dispensing mechanism 115 aspirates a necessary amount of a reagent 116 for analysis from the reagent storing unit 102, and discharges the aspirated reagent 116 into the reaction container 114. The plurality of stirring units 104 to 109 are provided on the outer circumferential side of the reaction disk, and each of the stirring units 104 to 109 stirs the sample 112 and the reagent 116 discharged into the reaction container 114. The analyzing unit 110 executes component analysis of a reaction liquid obtained by the progress of the reaction of the sample 112 and the reagent 116 by measuring an absorbance of the reaction liquid. The cleaning unit 111 cleans the reaction container 114 after completion of the measurement of the absorbance. The next sample 112 is discharged by the sample dispensing mechanism 113 into the reaction container 114 cleaned by the cleaning unit 111, and subsequently the same sequence is repeated.

Here, the stirring units 104 to 109 realize the stirring of the sample 112 and the reagent 116 in a non-contact manner using vibrations, acoustic flows, acoustic radiation pressure, or the like by irradiating the reaction container 114 with ultrasonic waves. By providing the plurality of stirring units, the stirring of the sample 112 and the reagent 116 is efficiently executed, and a high processing capacity is realized. In the present embodiment, as liquid that mediates acoustic waves, constant-temperature water is used. However, water other than constant-temperature water may also be used, and a liquid other than water may also be used. In addition, as long as vibration or the like can be applied to the sample 112 and the reagent 116, acoustic waves other than ultrasonic waves may also be used.

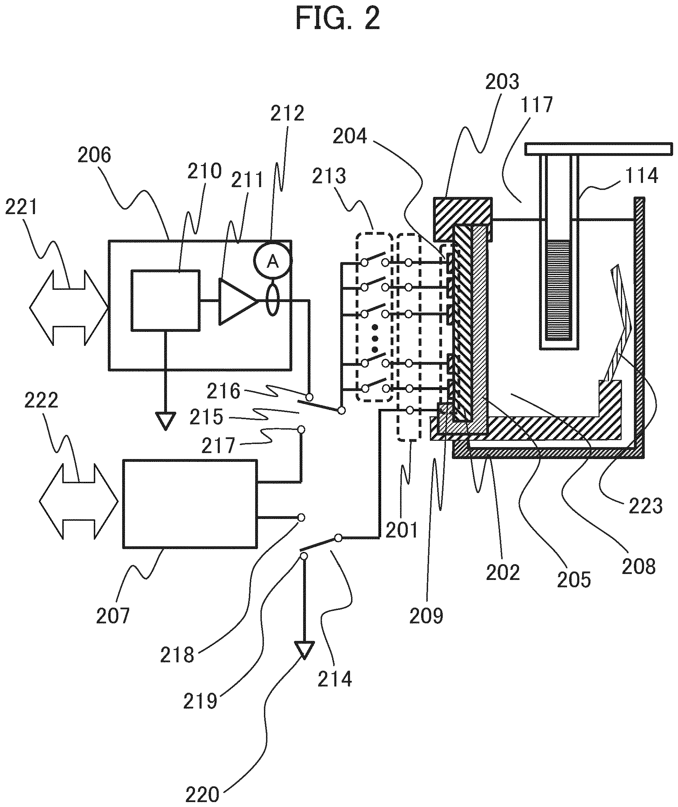

Fig. 2 is a diagram that shows configurations of the stirring unit, and the power amplifier and the impedance measuring unit which are connected to the stirring unit. Fig. 2 shows a cross-section of the stirring unit 104 in the vertical direction along a radial direction of the sample storing unit 101, and shows a schematic configuration of an electrical circuit that is arranged on the host computer side with respect to the connector 201. Hereinafter, the stirring unit 104 will be described as an example, but the same description can be applied to the stirring units 105 to 109.

As shown in Fig. 2, the stirring unit 104 includes a piezoelectric element 202 that generates ultrasonic waves, a jig 203 for attaching the piezoelectric element 202 to a constant temperature bath 117, a reflector 223 that reflects the ultrasonic waves transmitted through the reaction container 114 or the like toward the reaction container 114, and the connector 201 that electrically connects the piezoelectric element 202 and the host computer side. In addition, the piezoelectric element 202 includes: segmented electrodes 204 and 209 that are provided on one surface (air side surface) to be in contact with the air; and a constant-temperature water side electrode 205 that is provided on another surface (constant-temperature water side surface) to be in contact with constant-temperature water 208. A part of the constant-temperature water side electrode 205 is folded to the air side surface along a lower end surface of the piezoelectric element 202.

The segmented electrodes 204 and 209 are segmented into a plurality of electrodes at different height positions. In the present embodiment, an example where 13 segmented electrodes are provided (Fig. 2 or the like shows only a part of the segmented electrodes) will be described, and the number of the segmented electrodes is not limited to 13. The dimensions and shapes of the segmented electrodes can be individually freely designed. However, in the present embodiment, all of the first to twelfth segmented electrodes 204 have the same shape (the same width and length), and only the thirteenth (lowermost) segmented electrode 209 is formed to be slightly longer than the other segmented electrodes 204. Each of the segmented electrodes is connected one-to-one to each of pins of the connector 201.

Next, a configuration of an electrical circuit on the host computer side will be described. First, a power amplifier 206 applies a voltage to the segmented electrodes such that the piezoelectric element 202 is driven to generate ultrasonic waves. Specifically, as shown in Fig. 2, the power amplifier 206 includes a function generating circuit 210 that generates a drive waveform, a final stage amplifier circuit 211 that amplifies the waveform to a desired power, and a current monitor 212 that measures a current flowing through the piezoelectric element 202 during the voltage application. The current monitor 212 can be configured to use, for example, electromagnetic coupling. On the other hand, an impedance measuring circuit 207 measures frequency characteristics of electric impedance of the piezoelectric element 202 (hereinafter, also abbreviated as "ImpS"). The ImpS of the piezoelectric element 202 is represented by a set including the ImpS of the respective segmented electrodes (that is, the ImpS between the segmented electrodes 204 and 209 and the constant-temperature water side electrode 205).

In the power amplifier 206, a first interface unit 221 that connects the host computer is provided, and the host computer controls the power amplifier 206 through the first interface unit 221. Likewise, in the impedance measuring circuit 207, a second interface unit 222 that connects the host computer is provided, and the host computer controls the impedance measuring circuit 207 through the second interface unit 222. In addition, the impedance measuring circuit 207 transmits the measurement result of the ImpS to the host computer through the second interface unit 222.

Here, the power amplifier 206 and the impedance measuring circuit 207 are connected to the stirring unit 104 through the connector 201. Further, relays 213 are arranged between the power amplifier 206 and the impedance measuring circuit 207, and the connector 201. The relays 213 include a plurality of switches, and control the opening and closing of each of the switches based on an instruction from the host computer. That is, the relays 213 function as a switching device that switches connection between the power amplifier 206 and the impedance measuring circuit 207, and the segmented electrodes 204 and 209.

The host computer detects a liquid level position (liquid level height) of the liquid in the reaction container 114 (a specific example of a detection method will be described below). Further, the host computer selects one or more of the segmented electrodes 204 and 209 at appropriate positions according to the liquid level position, and controls the relays 213 such that a voltage is applied to the selected segmented electrodes 204 and 209. This way, the irradiation position of the reaction container 114 with the ultrasonic waves is adjusted.

In addition, a first changeover switch 215 that switches between the connection of the piezoelectric element 202 to the power amplifier 206 and the connection of the piezoelectric element 202 to the impedance measuring circuit 207 is provided between the power amplifier 206 and the impedance measuring circuit 207, and the relays 213. Further, a second changeover switch 214 that switches between the connection of the impedance measuring circuit 207 to the piezoelectric element 202 and the connection of the impedance measuring circuit 207 to the ground is provided between the impedance measuring circuit 207 and the connector 201. For example, during the stirring operation, the first changeover switch 215 is connected to a terminal 216 of the power amplifier 206, and the second changeover switch 214 is connected to a terminal 219 (is finally connected to a ground 220). On the other hand, during the ImpS measurement, the first changeover switch 215 is connected to an output terminal 217 of the impedance measuring circuit 207, and the second changeover switch 214 is connected to an input terminal 218 of the impedance measuring circuit 207.

This way, the host computer according to the present embodiment applies a voltage to each of the segmented electrodes 204 and 209 through the power amplifier 206, and measures the ImpS of the piezoelectric element 202 through the impedance measuring circuit 207. The impedance measuring circuit 207 does not need to be configured to be independent from the host computer as shown in Fig. 2, and the impedance measuring circuit 207 and the host computer may be integrated and configured by a single electronic circuit.

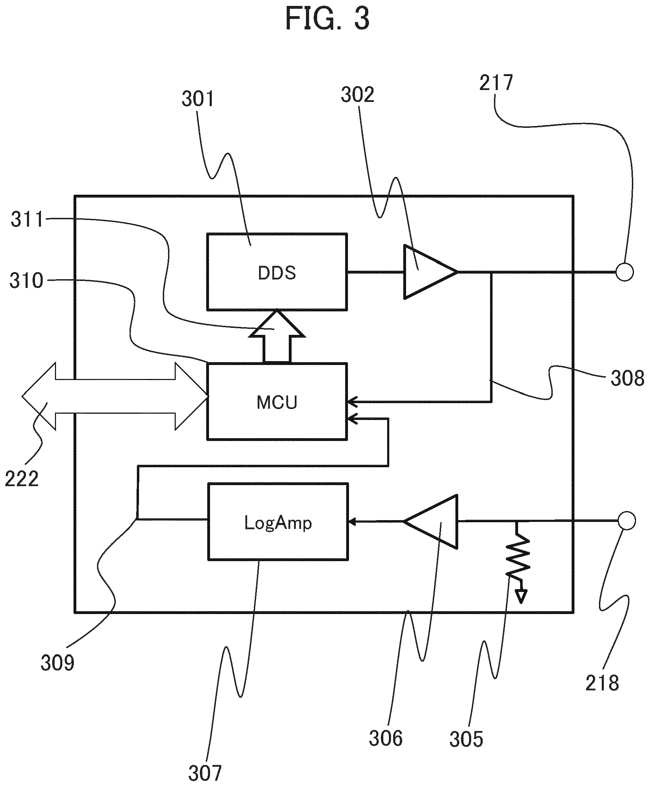

Fig. 3 is a diagram that shows details of a configuration of the impedance measuring circuit 207. In the impedance measuring circuit 207 shown in Fig. 3, a direct digital synthesizer (hereinafter, abbreviated as "DDS") 301 generates a sine wave voltage having any frequency. The sine wave voltage generated by the DDS 301 is amplified by an amplifier 302 and is output from the output terminal 217. The output terminal 217 is connected to the segmented electrodes 204 through the first changeover switch 215 and the relays 213, and the segmented electrodes 204 apply the sine wave voltage to the piezoelectric element 202.

Here, the magnitude of the applied voltage can be appropriately designed depending on the characteristics and the like of the piezoelectric element 202. However, by setting a voltage during the ImpS measurement to be a voltage (for example, a voltage called a weak voltage) lower than that during the stirring operation, the breakage of the piezoelectric element 202 can be prevented. A current flowing through the piezoelectric element 202 during the voltage application flows to the input terminal 218 through the constant-temperature water side electrode 205 and the relays 213, and is detected as a voltage value by a detection resistor 305.

The voltage signal detected by the detection resistor 305 is further amplified by a logarithmic amplifier 307 (LogAmp) through an operational amplifier 306 that linearly amplifies the signal with an appropriate gain. The voltage that is applied from the output terminal 217 to the piezoelectric element 202 is input to a micro control unit (hereinafter, abbreviated as "MCU") 310 through a wiring 308. In addition, the voltage amplified by the logarithmic amplifier 307 is input to the MCU 310 through a wiring 309. In the embodiment shown in Fig. 3, since it is assumed that the resolution of the A/D converter built in the MCU 310 is about 8 to 10 bits, the logarithmic amplifier 307 is used. When the MCU 310 including an A/D converter with a higher resolution is adopted, a linear amplifier may also be used instead of the logarithmic amplifier.

The voltage signal input to the MCU 310 undergoes A/D conversion. The MCU 310 transmits a control signal 311 to the DDS 301 and sweeps the frequency of the generated sine wave in a desired frequency range. The frequency at this time, the applied voltage from the output terminal 217, and a measured voltage corresponding to the current flowing through the piezoelectric element 202 are stored in a memory in the MCU 310, and are transmitted as the ImpS measurement result to the host computer through the second interface unit 222.

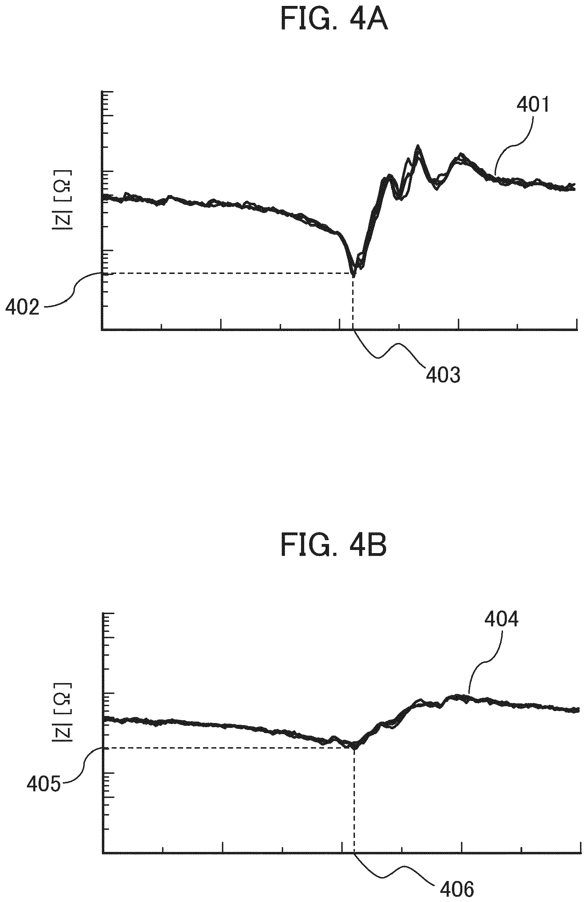

Fig. 4A is an example of the result of ImpS measurement of the piezoelectric element 202 in the air, and Fig. 4B is an example of the result of ImpS measurement with one side of the piezoelectric element 202 in contact with the constant-temperature water. In Figs. 4A and 4B, the horizontal axis represents the drive frequency, and the vertical axis represents an absolute value |Z| of the electric impedance.

As can be seen with reference to a first profile group 401 of Fig. 4A, a frequency at which the absolute value |Z| of the ImpS is a minimum value 402 is a resonance frequency 403 of the piezoelectric element 202. A phase difference at the resonance frequency 403 is substantially zero, and this resonance frequency 403 refers to a point at which the piezoelectric element 202 changes from the capacitive property to the inductive property. In addition, it is presumed that, at the resonance frequency 403, the piezoelectric element 202 further vibrates as compared to a case where the piezoelectric element 202 is driven at another frequency, and is in a resonant state in a thickness direction of the piezoelectric element 202.

On the other hand, when a second profile group 404 of Fig. 4B is compared to the first profile group 401 of Fig. 4A, a resonance frequency 406 is not substantially different from the resonance frequency 403. However, the absolute value |Z| of the electric impedance at the resonance frequency in Fig. 4B, that is, a minimum value 405 of the absolute value |Z| of the electric impedance in the second profile group 404 is higher than the minimum value 402 of the absolute value |Z| of the electric impedance in the first profile group 401.

Here, a specific acoustic impedance of water to air is 3000 times or more, and when the acoustic impedance is high, an acoustic load increases, and the electric impedance increases correspondingly. That is, it is considered that Fig. 4B shows a state where the vibration of the surface of the piezoelectric element 202 in contact with the constant-temperature water propagates to the constant-temperature water and the ultrasonic waves are irradiated from the surface of the piezoelectric element 202.

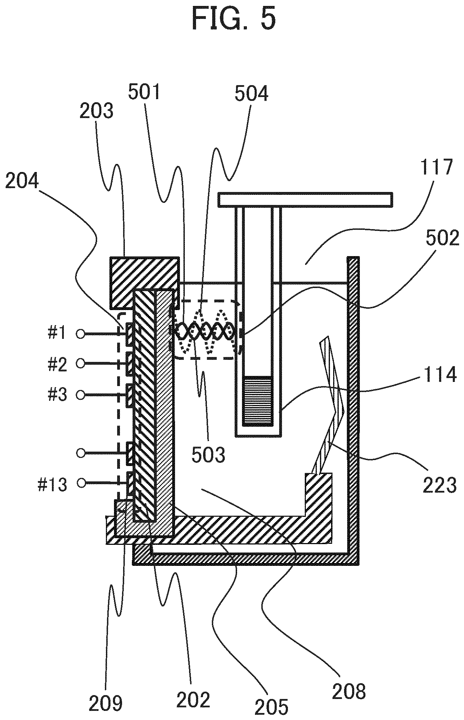

Fig. 5 shows the influence of a standing wave between the reaction container 114 and the piezoelectric element 202. The ultrasonic waves generated by applying a voltage to the piezoelectric element 202 propagate to the constant-temperature water 208, and propagate up to the reaction container 114 as a traveling wave 501. When a liquid is not present in the reaction container 114, the ultrasonic waves that reach the reaction container 114 are substantially totally reflected from an inner surface 502 of the reaction container 114 to generate a reflected wave 503. That is, between the inner surface 502 of the reaction container 114 and the piezoelectric element 202, the traveling wave 501 and the reflected wave 503 are combined to generate a standing wave 504.

The ultrasonic waves have a property in which reflection does not occur in a uniform material, in other words, a property in which reflection occurs at a material boundary between different materials. Accordingly, the ultrasonic waves are substantially totally reflected at a material boundary having a significantly large difference in acoustic impedance between water and air. In the present embodiment, the ultrasonic waves reach the reaction container 114 through the constant-temperature water as a liquid. Therefore, the magnitude of the standing wave 504 largely varies depending on whether or not a liquid is present in the reaction container 114.

Next, a method of detecting the liquid level using the magnitude of the influence of the standing wave 504 will be described. When the sample 112 or the reagent 116 is present in the reaction container 114, a difference in acoustic impedance at the material boundary is small, and thus the influence of the standing wave is small. On the other hand, when the sample 112 or the reagent 116 is not present in the reaction container 114, a difference in acoustic impedance at the material boundary is large, and thus the influence of the standing wave is large. As shown in Fig. 5, the ID numbers of the segmented electrodes 204 and 209 of the piezoelectric element 202 are allocated with 1, 2, ..., 13 in order from the top, respectively, the electric impedances thereof are measured, and the magnitudes of the influences of the standing wave in the segmented electrodes 204 and 209 are measured. As a result, the liquid level height in the reaction container 114 can be measured.

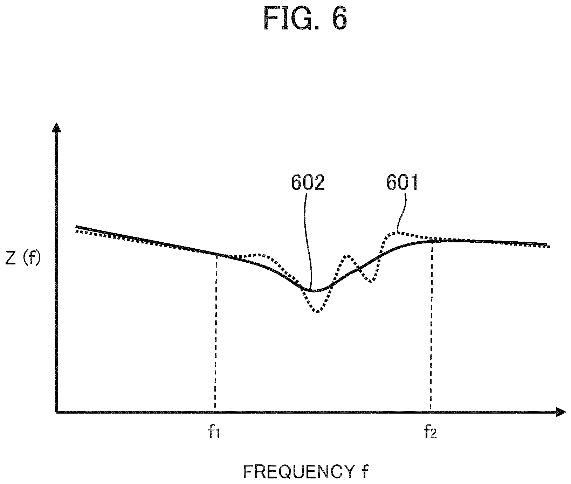

Fig. 6 is a graph that shows the frequency characteristics of electric impedance when a liquid is present at a position of a segmented electrode and when a liquid is not present at the position. The horizontal axis represents the frequency, and the vertical axis represents the absolute value of the electric impedance. The ImpS measured by the segmented electrode (for example, the ID number 1) at a height where the liquid is not present in the reaction container 114, has some poles due to the influence of the standing wave as indicated by a dotted line 601 in Fig. 6, and it can be seen that the variation is large. On the other hand, the ImpS measured by the segmented electrode (for example, the ID number 13) at a height where the liquid is present in the reaction container 114 has a few poles as indicated by a solid line 602 in Fig. 6, and it can be seen that the variation is small.

This way, by determining the magnitude of the influence of the standing wave based on the magnitude of variation of the ImpS measured by the impedance measuring circuit 207, whether or not a liquid is present in the reaction container 114 and the height of the liquid level can be detected. The following (Expression 1) is an expression for quantitatively deriving the magnitude of variation of the ImpS (hereinafter, defined as Esw).

[Numeral 1]

$$E_{SW} \equiv \frac{1}{f_2 - f_1} \int_{f_1}^{f_2} |Z(f) - Z_{flt}(f)| \, df \quad \cdots (\text{Expression 1})$$

As a specific procedure for deriving the Esw, first, frequency characteristics Z(f) of the electric impedance of a specific segmented electrode (for example, the ID number 1) are measured. At this time, a frequency range to be swept only needs to be larger than a range of f1 and f2 used in (Expression 1) above. Next, in the control unit, the waveform is smoothed. As means for the smoothing, for example, various methods such as a moving average method are used. Frequency characteristics of the electric impedance filtered by a smoothing filter are represented by Zflt(f), and definite integration is executed as in (Expression 1). As a result, a difference between Z(f) and Zflt(f) is quantified. That is, a difference in the frequency characteristics of the electric impedance before and after the smoothing filter process in the segmented electrode is quantified, and the influence of the standing wave at the position of each of the segmented electrodes is quantified by this difference.

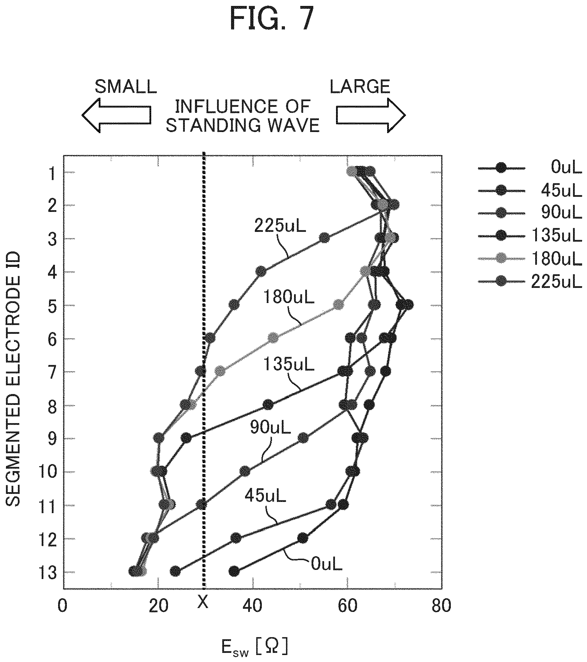

Fig. 7 is a graph that shows the relation between Esw and the ID number of each segmented electrode when the amount of water in the reaction container 114 changes (0 μL, 45 μL, 90 μL, 135 μL, 180 μL, 225 μL). As can be seen from Fig. 7, the Esw draws a curve that varies depending on the amount of water present in the reaction container 114. Here, a predetermined threshold X is predetermined by the relationship between the Esw of each of the segmented electrodes and the amount of water in the reaction container 114. Therefore, by presuming that water is not present at a height of the segmented electrode where the Esw exceeds the threshold X, the height of the liquid level in the reaction container 114 can be detected.

Hereinafter, an abnormality determination method for the automatic analyzer based on the electric impedance will be described using two examples.

First Example

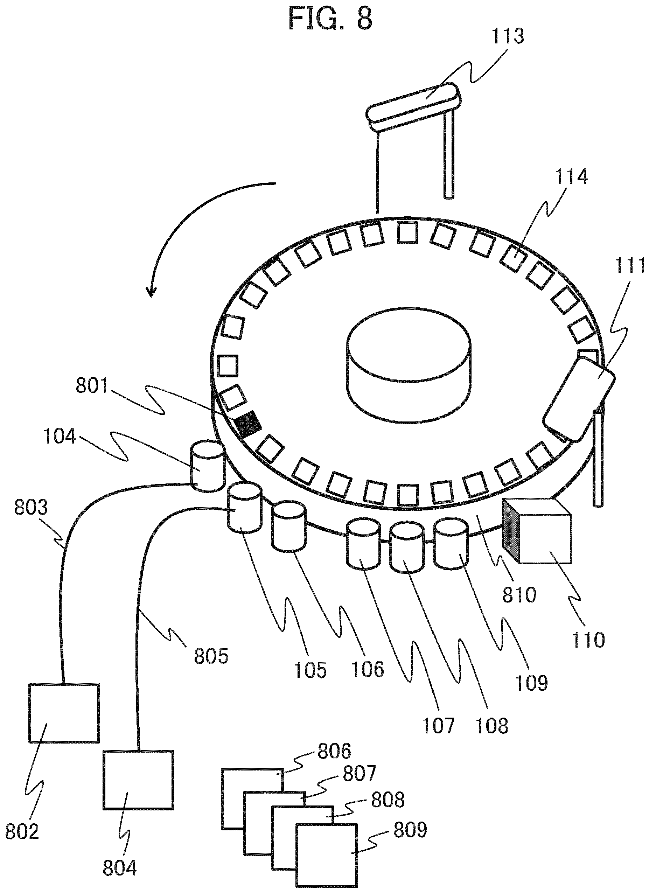

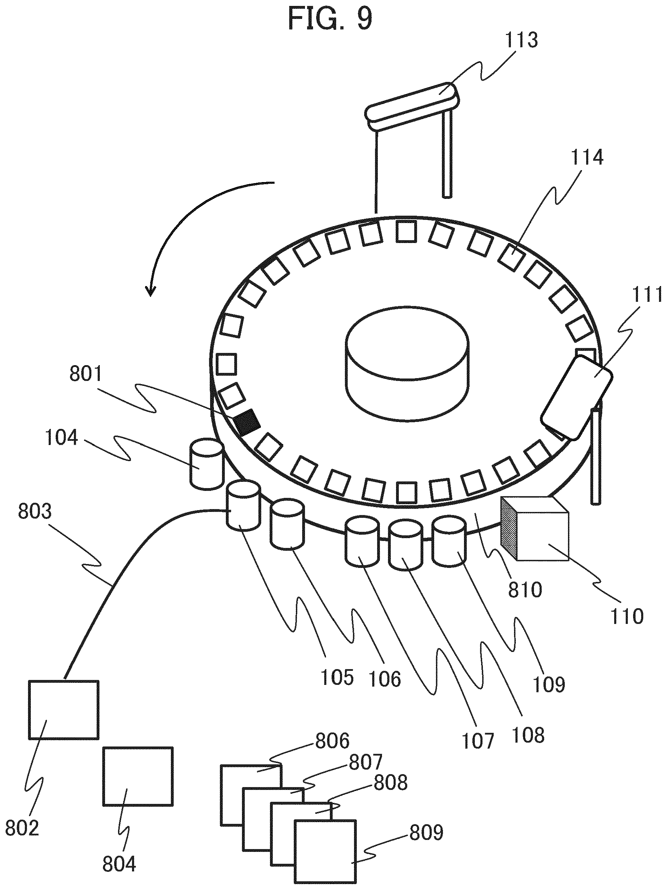

In a first example, a connection condition between the stirring units 104 to 109 and the power amplifier 206 or the impedance measuring circuit 207, for example, whether or not the connector 201 is erroneously inserted is determined based on whether or not a liquid in the reaction container 114 can be detected. Fig. 8 is a schematic view that shows a case where the stirring units 104 and 105 are normally connected to relay boards 802 and 804, and Fig. 9 is a schematic view that shows a case where the stirring units 104 and 105 are not normally connected to relay boards 802 and 804.

In Fig. 8, the relay board 802 provided in the relays corresponding to the stirring unit 104 is normally connected to the stirring unit 104 through a wiring 803. Likewise, the relay board 804 provided in the relays corresponding to the stirring unit 105 is normally connected to the stirring unit 105 through a wiring 805. This way, each of the stirring units, each of the relay boards, and each of the wirings are connected by an appropriate combination. Therefore, a desired stirring operation can be executed.

However, when the connectors 201 have the same shape, for example, as shown in Fig. 9, the relay board 802 provided in the relays corresponding to the stirring unit 104 may be erroneously connected to the stirring unit 105 through the wiring 803 due to a wiring connection mistake or the like during device assembly. In this case, an ultrasonic wave stirring operation set depending on dispensing parameters or the like is not executed when the desired reaction container 114 is stirred, which may adversely affect the analysis result due to insufficient stirring. In addition, although the sample 112 or the reagent 116 is not present, a strong voltage is applied, which may also cause the breakage of the stirring unit 104 due to empty discharge.

In order to avoid this malfunction, in the present example, whether or not erroneous insertion of the connector 201 between the stirring units 104 to 109 and the relay boards 802 to 809 occurs during device assembly is executed, and the summary of the determination method will be described.

Initially, the control unit causes the cleaning unit 111 to discharge deionized water into a specific reaction container 114 (hereinafter, the reaction container will be referred to as a reference cell 801). At this time, it is necessary to make sure that deionized water or a liquid such as a sample or a reagent is not present in the reaction containers 114 other than the reference cell 801.

Next, the control unit rotates a reaction disk 810 to move the reference cell 801 to a stirring position of the stirring unit 104. The control unit checks the liquid level height in the reference cell 801 using the above-described method. At this time, the liquid level height is detected as long as there is no erroneous insertion of the connector 201 and the relay board 802 and the stirring unit 104 are correctly connected through the wiring 803. On the other hand, when the erroneous insertion of the connector 201 occurs, the liquid level height is not detected.

After checking the liquid level height at the stirring position of the stirring unit 104, the liquid level height is also checked at stirring positions of the stirring units 105 to 109. When the height of deionized water in the reference cell 801 can be determined even without using all of the segmented electrodes, the height of deionized water may be determined using a part of the segmented electrodes. In addition, the reference cell 801 may contain a liquid other than deionized water. Further, a method of detecting only whether or not a liquid is present instead of the liquid level height may also be used.

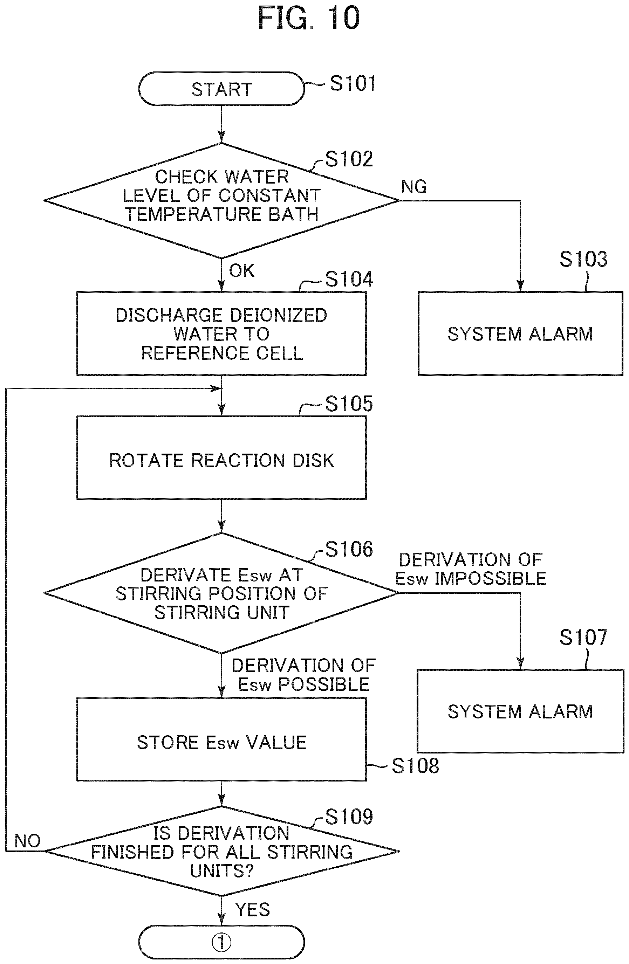

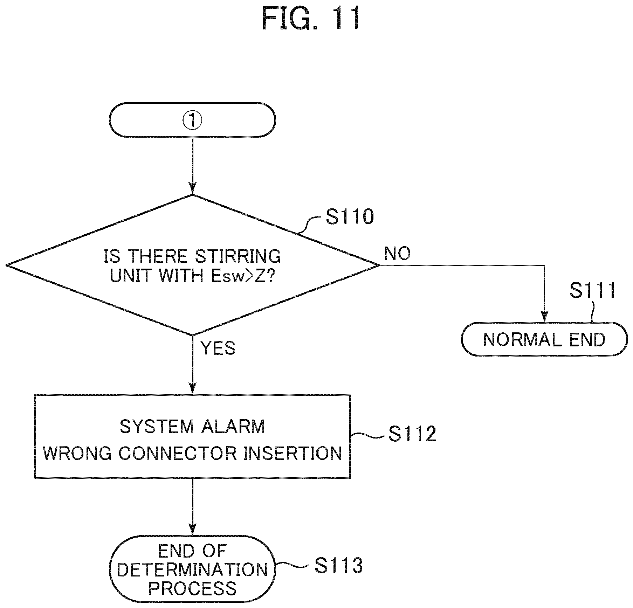

The above-described abnormality determination method will be described in more detail using Figs. 10 and 11. Figs. 10 and 11 are flowcharts that show a method for determining whether the connector 201 is correctly inserted into the stirring units 104 to 109, Fig. 10 shows a part (first half) of the flowchart, and Fig. 11 shows the remaining part (latter half) of the flowchart.

First, as shown in Fig. 10, the control unit of the automatic analyzer starts an abnormality determination operation (Step S101). Next, the control unit checks the water level of the constant temperature bath 117 (Step S102). As a method of checking the water level, not only a method using a water level sensor mounted on the automatic analyzer but also the method of detecting the liquid level based on the ImpS measured by the impedance measuring circuit 207 as described above may also be used.

When the constant temperature bath 117 does not reach a predetermined water level, the control unit outputs a system alarm and ends the abnormality determination operation (Step S103). On the other hand, when the constant temperature bath 117 reaches the predetermined water level, the control unit discharges deionized water into the reference cell 801 using the cleaning unit 111 (Step S104) . Dispensing parameters when deionized water is discharged into the reference cell 801 are stored in the control unit. The amount of deionized water discharged into the reference cell 801 can be freely set in a range where the amount can be measured by each of the stirring units.

Next, in order to move the reference cell 801 to the stirring position of the stirring unit 104, the control unit rotates the reaction disk 810 to a prescribed angle that is preset (Step S105). In the present example, the reaction disk 810 rotates counterclockwise.

Next, the control unit derives the Esw of the reference cell 801 using each of the segmented electrodes of the stirring unit 104 (Step S106) . In the present example, it is assumed that the Esw is derived in all of the segmented electrodes (ID numbers 1 to 13) of the piezoelectric element 202. The Esw may also be derived using only a part of the segmented electrodes. When the Esw cannot be derived due to the erroneous insertion or the like of the connector 201, the control unit outputs a system alarm and ends the abnormality determination operation (Step S107). On the other hand, when the Esw can be derived, the control unit stores the derived Esw (Step S108), and determines whether or not the derivation of the Esw is completed in all of the stirring units (Step S109). At this stage, the derivation of the Esw is not completed in the stirring units other than the stirring unit 104. Therefore, the control unit returns to Step S105, and in order to move the reference cell 801 to the stirring position of the next stirring unit 105, rotates the reaction disk 810 to a prescribed angle that is preset.

Subsequently, when the derivation of the Esw is completed in the stirring units 104 to 109 by repeating the above-described operations, the control unit ends the operation of Fig. 10, and proceeds to the operation of Fig. 11.

In the operation of Fig. 11, first, the control unit checks whether or not Esw exceeding the prescribed value (threshold Z) that is preset is present among the Esws (Esw1, Esw2, Esw3, Esw4, Esw5, and Esw6) measured at stirring positions of the stirring units 104 to 109 (Step S110). When the stirring unit where Esw > Z is satisfied is not present, the control unit can determine that the liquid level of the deionized water in the reference cell 801 can be normally detected at the stirring positions of all the stirring units. Therefore, the abnormality determination operation normally ends (Step S111).

On the other hand, when the stirring unit where Esw > Z is satisfied is present, the control unit can determine that the liquid level of the deionized water in the reference cell 801 cannot be normally detected at the stirring positions of all the stirring units. Therefore, there is a possibility that the connector 201 may be erroneously inserted. Accordingly, in this case, the control unit outputs a system error (Step S112), displays the stirring unit that satisfies Esw > Z, and ends the determination operation (Step S113).

Second Example

In a second example, the control unit determines an inclination condition of the automatic analyzer according to a liquid level height of the constant-temperature water as detected in each of the stirring units. In general, the weight of the automatic analyzer is biased. Therefore, there is a possibility that, in a placement location of the automatic analyzer, a floor corresponding to a heavy portion may be depressed such that an inclination occurs in the automatic analyzer. When the automatic analyzer is inclined, the liquid level height in the constant temperature bath 117 or the reaction container 114 varies depending on locations, and there is also a possibility that liquid leakage may occur or the stirring operation cannot be executed according to set parameters.

Accordingly, in the present example, whether or not the liquid level height of the constant-temperature water at each of locations is detected based on whether or not the plurality of segmented electrodes 204 and 209 in the piezoelectric element 202 of each of the stirring units can detect the constant-temperature water. When the constant temperature bath 117 is inclined, there is a possibility that the water level of the constant-temperature water varies depending on locations. Accordingly, the control unit according to the present example detects the water level of the constant-temperature water in some different locations, and determines the inclination of the constant temperature bath 117 based on whether or not the difference between the water levels of the locations is within a prescribed value.

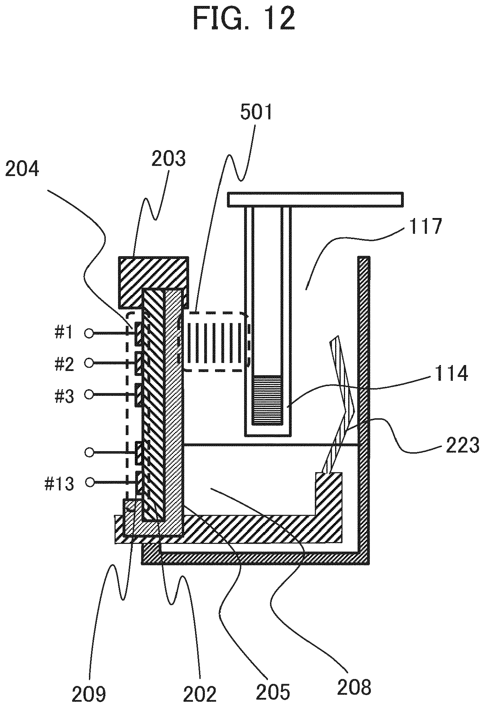

Fig. 12 is a view that shows the water level of constant-temperature water at the time of determining the inclination of the constant temperature bath 117. In the present example, when the inclination condition of the constant temperature bath 117 is determined, as shown in Fig. 12, the water level of the constant-temperature water is lower than that during the component analysis, for example, is one third of that during the component analysis. The control unit derives the Esw at this time using each of the segmented electrodes 204 and 209 of the stirring units 104 to 109. Further, the control unit compares the derived Esw and the threshold X to each other using the above-described method and detects the liquid level height in each of the stirring units.

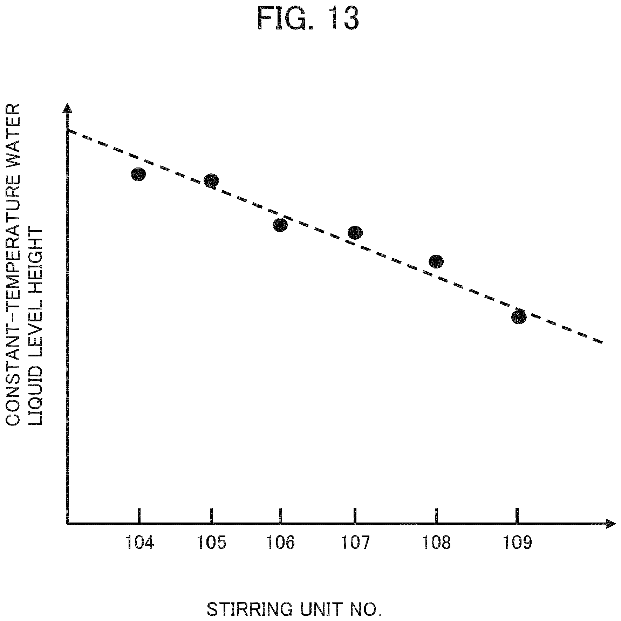

Fig. 13 is a graph that shows the liquid level height of the constant-temperature water in each of the stirring units. As shown in Fig. 13, a relationship between the position of the stirring unit and the liquid level height of the constant-temperature water can be approximated using a linear function. When the inclination of the linear function is within a preset range, that is, the lower limit value < the inclination of the linear function < the upper limit value is satisfied, the inclination of the constant temperature bath 117 is within a tolerance. Therefore, the control unit determines that there is no problem. Meanwhile, when the inclination of the linear function is outside this range, that is, the inclination of the linear function < the lower limit value or the upper limit value < the inclination of the linear function is satisfied, the inclination of the constant temperature bath 117 is outside the tolerance. Therefore, the control unit outputs a system alarm.

It is assumed that the abnormality detection described in the first example and the second example is executed, for example, when the automatic analyzer is installed, when the stirring unit is replaced, or when maintenance is regularly executed. However, the automatic analyzer may be executed every start-up.

The present invention is not limited to each of the embodiments and includes various modification examples. For example, each of the embodiments has been described in detail in order to easily describe the present invention, and the present invention does not necessarily include all the configurations described above. A part of the configuration of one embodiment can be replaced with the configuration of another embodiment. Further, the configuration of one embodiment can be added to the configuration of another embodiment. Addition, deletion, and replacement of another configuration can be made for a part of the configuration of each of the embodiments.

Reference Signs List

| 101: | sample storing unit |
| 102: | reagent storing unit |
| 103: | reaction unit |
| 104 to 109: | stirring unit |
| 110: | analyzing unit |
| 111: | cleaning unit |
| 112: | sample |
| 113: | sample dispensing mechanism |
| 114: | reaction container |
| 115 | reagent dispensing mechanism |
| 116: | reagent |
| 117: | constant temperature bath |
| 201: | connector |
| 202: | piezoelectric element |
| 203: | jig |
| 204: | segmented electrode |
| 205: | constant-temperature water side electrode |
| 206: | power amplifier |
| 207: | impedance measuring circuit |
| 208: | constant-temperature water |
| 209: | segmented electrode (lower electrode) |
| 210: | function generating circuit |
| 211: | final stage amplifier circuit |
| 212: | current monitor |
| 213: | relays |
| 214: | second changeover switch |
| 215: | first changeover switch |
| 216: | terminal |
| 217: | output terminal |
| 218: | input terminal |
| 219: | terminal |
| 220: | ground |
| 221: | first interface unit |
| 222: | second interface unit |
| 223: | reflector |
| 301: | DDS |
| 302: | amplifier |
| 305: | detection resistor |
| 306: | operational amplifier |
| 307: | logarithmic amplifier |
| 308, 309: | wiring |
| 310: | MCU |
| 311: | control signal |
| 401: | first profile group |
| 402: | minimum value (of the first profile group) |
| 403: | resonance frequency (of the first profile group) |
| 404: | second profile group |
| 405: | minimum value (of the second profile group) |
| 406: | resonance frequency (of the second profile group) |

| 501: | traveling wave |
| 502: | inner surface (of the reaction container) |
| 503: | reflected wave |
| 504: | standing wave |
| 601: | dotted line |
| 602: | solid line |
| 801: | reference cell |
| 802: | relay board |
| 803: | wiring |
| 804: | relay board |
| 805: | wiring |
| 806 to 809: | relay board |
| 810: | reaction disk |

**Claims**

1. An automatic analyzer comprising:

   a stirring unit that stirs a sample and a reagent by irradiating a reaction container with ultrasonic waves;
   a power amplifier that applies a voltage to a piezoelectric element of the stirring unit;
   an impedance measuring unit that measures an electric impedance of the piezoelectric element of the stirring unit;
   an analyzing unit that makes component analysis of a reaction liquid of the sample and the reagent; and
   a control unit that controls the stirring unit, the power amplifier, the impedance measuring unit, and the analyzing unit, wherein
   a plurality of the stirring units are provided, and
   the control unit determines a connection condition between the stirring unit and the power amplifier or the impedance measuring unit, or an inclination condition of the automatic analyzer according to the electric impedance measured by the impedance measuring unit for the plural stirring units.

2. The automatic analyzer according to Claim 1, further comprising:

   a reaction disk that can rotate with the reaction container arranged in a circumferential pattern, wherein
   the control unit rotates the reaction disk to move the reaction container into which deionized water has been discharged, to a stirring position for each of the stirring units and determines the connection condition according to whether the deionized water can be detected for each of the stirring units.

3. The automatic analyzer according to Claim 2, wherein
   the control unit detects presence or absence of the deionized water according to a magnitude of variation in frequency characteristics of the electric impedance as measured by the impedance measuring unit.

4. The automatic analyzer according to Claim 3, wherein
   when the stirring unit where the magnitude of variation is not derivable is present or when the stirring unit where the magnitude of variation exceeds a prescribed value is present, the control unit outputs an alarm.

5. The automatic analyzer according to Claim 1, further comprising:

   a constant temperature bath that holds constant-temperature water to keep the reaction container at a prescribed temperature, wherein
   the control unit determines an inclination condition of the constant temperature bath according to a liquid level height of the constant-temperature water as detected in each of the stirring units.

6. The automatic analyzer according to Claim 5, wherein

   the piezoelectric element has a plurality of electrodes at different height positions, and
   the control unit detects the liquid level height of the constant-temperature water according to whether each of the electrodes can detect the constant-temperature water.

**7.** The automatic analyzer according to Claim 5, wherein
when the control unit determines the inclination condition of the constant temperature bath, a water level of the constant-temperature water is lower than when component analysis is made.

**8.** An abnormality determination method for an automatic analyzer,

the automatic analyzer including
a stirring unit that stirs a sample and a reagent by irradiating a reaction container with ultrasonic waves,
a power amplifier that applies a voltage to a piezoelectric element of the stirring unit,
an impedance measuring unit that measures an electric impedance of the piezoelectric element of the stirring unit, and
an analyzing unit that makes component analysis of a reaction liquid of the sample and the reagent, the abnormality determination method comprising:
determining a connection condition between the stirring unit and the power amplifier or the impedance measuring unit, or an inclination condition of the automatic analyzer according to the electric impedance measured by the impedance measuring unit for at least two of the stirring units.


**Amended claims under Art. 19.1 PCT**

**1.** (Amended) An automatic analyzer comprising:

a stirring unit that stirs a sample and a reagent by irradiating a reaction container with ultrasonic waves;
a reaction disk that can rotate with the reaction container arranged in a circumferential pattern;
a power amplifier that applies a voltage to a piezoelectric element of the stirring unit;
an impedance measuring unit that measures an electric impedance of the piezoelectric element of the stirring unit;
an analyzing unit that makes component analysis of a reaction liquid of the sample and the reagent; and
a control unit that controls the stirring unit, the reaction disk, the power amplifier, the impedance measuring unit, and the analyzing unit, wherein
a plurality of the stirring units are provided, and
the control unit rotates the reaction disk to move the reaction container into which deionized water is discharged to a stirring position of each of the stirring units, and determines a connection condition between the stirring unit and the power amplifier or the impedance measuring unit according to the electric impedance measured by the impedance measuring unit for each of the stirring units.

**2.** (Canceled)

**3.** (Amended) The automatic analyzer according to claim 1, wherein
the control unit detects presence or absence of the deionized water according to a magnitude of variation in frequency characteristics of the electric impedance as measured by the impedance measuring unit.

**4.** The automatic analyzer according to Claim 3, wherein
when the stirring unit where the magnitude of variation is not derivable is present or when the stirring unit where the magnitude of variation exceeds a prescribed value is present, the control unit outputs an alarm.

**5.** (Canceled)

**6.** (Canceled)

**7.** (Canceled)

**8.** (Amended) An abnormality determination method for an automatic analyzer,

the automatic analyzer including
a stirring unit that stirs a sample and a reagent by irradiating a reaction container with ultrasonic waves,
a reaction disk that can rotate with the reaction container arranged in a circumferential pattern,
a power amplifier that applies a voltage to a piezoelectric element of the stirring unit,
an impedance measuring unit that measures an electric impedance of the piezoelectric element of the stirring unit, and
an analyzing unit that makes component analysis of a reaction liquid of the sample and the reagent, the abnormality determination method comprising:
rotating the reaction disk to move the reaction container into which deionized water is discharged to a stirring position of each of at least two of the stirring units, and determining a connection condition between the stirring unit and the power amplifier or the impedance measuring unit according to the electric impedance measured by the impedance measuring unit for each of the stirring units.

**Statement under Art. 19.1 PCT**

In amended claim 1, the features recited in claim 2 before the amendment are added to claim 1 before the amendment.
Claims 2 and 5 to 7 are cancelled.
Amended claim 3 is amended to change the claim dependent thereon from claim 2 to claim 1.
In amended claim 8, the features recited in claim 2 before the amendment are added to claim 8 before the amendment.

# FIG. 1

# FIG. 2

# FIG. 3

## FIG. 4A

## FIG. 4B

# FIG. 5

# FIG. 6

# FIG. 7

# FIG. 8

# FIG. 9

# FIG. 10

START —S101

S102
CHECK WATER LEVEL OF CONSTANT TEMPERATURE BATH → NG

OK —S104

DISCHARGE DEIONIZED WATER TO REFERENCE CELL

S103
SYSTEM ALARM

—S105
ROTATE REACTION DISK

S106
DERIVATE $E_{sw}$ AT STIRRING POSITION OF STIRRING UNIT → DERIVATION OF $E_{sw}$ IMPOSSIBLE

DERIVATION OF $E_{sw}$ POSSIBLE

S107
SYSTEM ALARM

STORE $E_{sw}$ VALUE —S108

S109
NO — IS DERIVATION FINISHED FOR ALL STIRRING UNITS?

YES

①

# FIG. 11

Flowchart:

① → S110: IS THERE STIRRING UNIT WITH $E_{sw}>Z$?

- NO → S111: NORMAL END
- YES → S112: SYSTEM ALARM WRONG CONNECTOR INSERTION → S113: END OF DETERMINATION PROCESS

# FIG. 12

# FIG. 13

Y-axis: CONSTANT-TEMPERATURE WATER LIQUID LEVEL HEIGHT

X-axis: STIRRING UNIT NO.

104  105  106  107  108  109

## INTERNATIONAL SEARCH REPORT

| International application No. |
| --- |
| **PCT/JP2022/037922** |

### A. CLASSIFICATION OF SUBJECT MATTER

*G01N 35/00*(2006.01)i; *B06B 1/06*(2006.01)i; *G01N 35/02*(2006.01)i
FI:    G01N35/00 A; G01N35/02 D; B06B1/06 Z

According to International Patent Classification (IPC) or to both national classification and IPC

### B. FIELDS SEARCHED

Minimum documentation searched (classification system followed by classification symbols)

G01N35/00-37/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2010-96638 A (HITACHI HIGH-TECHNOLOGIES CORP) 30 April 2010 (2010-04-30) paragraphs [0008]-[0025], fig. 1-4 | 1, 5-8 |
| A | entire text, all drawings | 2-4 |
| Y | JP 2007-248413 A (TOSHIBA CORP) 27 September 2007 (2007-09-27) paragraphs [0054]-[0055], fig. 6-7 | 1, 5-8 |
| A | entire text, all drawings | 2-4 |
| A | JP 2007-40843 A (HITACHI HIGH-TECHNOLOGIES CORP) 15 February 2007 (2007-02-15) entire text, all drawings | 1-8 |
| P, A | WO 2021/256027 A1 (HITACHI HIGH-TECHNOLOGIES CORP) 23 December 2021 (2021-12-23) entire text, all drawings | 1-8 |
| E, A | JP 2022-177414 A (HITACHI HIGH TECH CORP) 01 December 2022 (2022-12-01) entire text, all drawings | 1-8 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 December 2022** | **27 December 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

| International application No. |
| --- |
| **PCT/JP2022/037922** |

| Patent document cited in search report | | | Publication date (day/month/year) | Patent family member(s) | Publication date (day/month/year) |
| --- | --- | --- | --- | --- | --- |
| JP | 2010-96638 | A | 30 April 2010 | (Family: none) | |
| JP | 2007-248413 | A | 27 September 2007 | (Family: none) | |
| JP | 2007-40843 | A | 15 February 2007 | (Family: none) | |
| WO | 2021/256027 | A1 | 23 December 2021 | (Family: none) | |
| JP | 2022-177414 | A | 01 December 2022 | (Family: none) | |

Form PCT/ISA/210 (patent family annex) (January 2015)

**REFERENCES CITED IN THE DESCRIPTION**

**Patent documents cited in the description**

- JP 2007040843 A

- JP 2010096638 A